# EUROPEAN PATENT SPECIFICATION

(11) **EP 3 829 104 B1**
(45) Date of publication and mention of the grant of the patent: **06.07.2022**
(21) Application number: 21153549.7
(22) Date of filing: 07.11.2018
(51) Int. Cl.: H04L 9/32

(54) **BLOCKCHAIN DATA PROTECTION BASED ON ACCOUNT NOTE MODEL WITH ZERO-KNOWLEDGE PROOF**
BLOCKKETTENDATENSCHUTZ AUF BASIS EINES KONTONOTENMODELLS MIT NULL-WISSENSNACHWEIS
PROTECTION DE DONNÉES DE CHAÎNE DE BLOCS BASÉE SUR UN MODÈLE DE BILLETS PROVENANT DE COMPTES ET UTILISANT UNE PREUVE À CONNAISSANCE NULLE

(43) Date of publication of application: 02.06.2021
(62) Divisional of application: 18867086.3
(73) Proprietor: Advanced New Technologies Co., Ltd., George Town, Grand Cayman KY1-9008 (KY)
(72) Inventor: MA, Baoli, West Lake District, Hangzhou, Zhejiang 310000 (CN); ZHANG, Wenbin, West Lake District, Hangzhou, Zhejiang 310000 (CN); MA, Huanyu, West Lake District, Hangzhou, Zhejiang 310000 (CN); LIU, Zheng, West Lake District, Hangzhou, Zhejiang 310000 (CN); LI, Lichun, West Lake District, Hangzhou, Zhejiang 310000 (CN)
(74) Representative: Fish & Richardson P.C.

(56) References cited:
- CN-A- 108 021 821
- CN-A- 108 418 689
- CN-A- 108 764 874
- IAN MIERS ET AL: "Zerocoin: Anonymous Distributed E-Cash from Bitcoin", SECURITY AND PRIVACY (SP), 2013 IEEE SYMPOSIUM ON, IEEE, 19 May 2013 (2013-05-19), pages 397-411, XP032431337, DOI: 10.1109/SP.2013.34 ISBN: 978-1-4673-6166-8

## Description

### BACKGROUND

Blockchain networks, which can also be referred to as blockchain systems, consensus networks, distributed ledger system networks, or blockchain, enable participating entities to securely and immutably store data. A blockchain can be described as a ledger of transactions and multiple copies of the blockchain are stored across the blockchain network. Example types of blockchains can include public blockchains, consortium blockchains, and private blockchains. A public blockchain is open for all entities to use the blockchain, and participate in the consensus process. A consortium blockchain is a blockchain where the consensus process is controlled by a pre-selected set of nodes such as certain organizations or institutions. A private blockchain is provided for a particular entity, which centrally controls read and write permissions.

Blockchains are used in crypto-currency networks, which enable participants to conduct transactions to buy/sell goods/services using a crypto-currency. A common crypto-currency includes Bitcoin. In crypto-currency networks, record-keeping models are used to record transactions between users. Example record-keeping models include the unspent transaction output (UTXO) model and the account balance model. In the UTXO model, each transaction spends output from prior transactions and generates new outputs that can be spent in subsequent transactions. A user's unspent transactions are tracked, and a balance that the user has to spend is calculated as the sum of the unspent transactions. In the account balance model, each user's account balance is tracked as a global state. For each transaction, a balance of a spending account is checked to make sure it is larger than, or equal to, the transaction amount. This is comparable to traditional banking.

A blockchain includes a series of blocks, each of which contains one or more transactions executed in the network. Each block can be analogized to a page of the ledger, while the blockchain itself is a full copy of the ledger. Individual transactions are confirmed and added to a block, which is added to the blockchain. Copies of the blockchain are replicated across nodes of the network. In this manner, there is global consensus on the state of the blockchain. Furthermore, the blockchain is open for all nodes to see, at least in the case of public networks. To protect privacy of blockchain users, encryption technologies are implemented.

CN 108 764 874 A describes an anonymous transfer method based on a blockchain. The method includes that a first node initiates a transfer transaction request to a second node, and receives public key information returned by the second node. Sent to the second node, the transaction information includes the new currency commitment generated based on the public key information, the transaction amount encrypted based on the public key information, and zero-knowledge proof. The second node verifies the transaction amount encrypted based on the public key information. If passed, the transaction information is published in the blockchain network for the miner node to verify and record the transaction. The miner node verifies the content of the proof in the zero-knowledge certificate. If the verification is passed, the transaction is determined to be valid the transaction information is recorded in the blockchain.

Ian Miers et al.: "Zerocoin: Anonymous Distributed E-Cash from Bitcoin", 2013 IEEE Symposium On Security And Privacy (SP), , IEEE, 19 May 2013, pages 397-411, ISBN: 978-1-4673-6166-8 describes "Zerocoin", a cryptographic extension to Bitcoin that augments the protocol to allow for fully anonymous currency transactions. Zerocoin uses standard cryptographic assumptions and does not introduce new trusted parties or otherwise change the security model of Bitcoin. The document details Zerocoin's cryptographic construction, its integration into Bitcoin, and examines its performance both in terms of computation and impact on the Bitcoin protocol.

Under the account balance model, commitment schemes can be used to hide values that both parties of a transaction commit to. Commitment schemes can arise out of the need for parties to commit to a choice or value, and later communicate that value to the other parties involved. For example, in an interactive Pedersen Commitment (PC) scheme, a first user can commit to a transaction amount t by sending a commitment value *PC(t, r)* that is generated based on random value r. The commitment value is generated, and a second user can only reveal the transaction amount t by obtaining the random number r. To ensure that the transaction amount is valid, a range proof can be created to prove that the transaction amount is greater than or equal to zero and less than or equal to the account balance.

In some cases, multiple transactions can be made from a user. Because the range proof is associated with the remaining balance of the account, it is important that the multiple transactions are verified sequentially in the blockchain. As such, the corresponding range proofs can be correctly associated with the remaining balances of the account after each transaction.

### SUMMARY

The invention is defined by the appended claims. Implementations of the present disclosure include computer-implemented methods for non-interactive privacy-preserving verifications of blockchain transactions with zero-knowledge proof based on account note model. More particularly, implementations of the present disclosure are directed to validating transactions between blockchain accounts under the account note model. In some implementations, in the account note model, account balances are stored as an aggregation of notes. In accordance with implementations of the present disclosure, the transaction validation can be performed based on commitment schemes and public-key encryption scheme or integrated encryption scheme without revealing transaction amount, note value, or random numbers for generating commitments.

In some implementations, actions include receiving, from a first account, a digitally signed copy of a plurality of note identifiers (IDs) identifying a corresponding plurality of notes, a commitment of a transaction amount of a transaction between the first account and a second account paid by at least a portion of the plurality of notes, a commitment of a change from deducting the transaction amount from a total value of the plurality of notes, a first random number used to generate the commitment of the transaction amount encrypted by a public key of the second account, the transaction amount encrypted by the public key of the second account, a second random number used to generate the commitment of the change encrypted by the public key of the first account, the change encrypted by the public key of the first account, one or more range proofs, and a zero-knowledge proof generated based on one or more selected random numbers; verifying a digital signature corresponding to the digitally signed copy using the public key of the first account; determining that the one or more range proofs prove that the transaction amount and the change are greater than, or equal to, zero; determining that the total value of the plurality of notes equals the sum of the transaction amount and the change; determining whether the transaction amount in the commitment is the same as the transaction amount that is encrypted, and whether a random number used to generate the commitment of the transaction amount is the same as the first random number; and updating the first account and the second account based on the plurality of notes, the transaction amount, and the change if the transaction amount in the commitment is the same as the transaction amount that is encrypted, and the random number used to generate the commitment of the transaction amount is the same as the first random number. Other implementations include corresponding systems, apparatus, and computer programs, configured to perform the actions of the methods encoded on computer storage devices.

These and other implementations may each optionally include one or more of the following features: each of the plurality of notes include one or more of a note type, a commitment of a note value, the note value encrypted by public-key encryption or integrated encryption, and a random number used to generate the commitment encrypted by the public-key encryption or the integrated encryption; determining that each of the plurality of notes has the same note type; the commitment of the transaction amount, the commitment of the change, and the commitment of the note value are generated using a commitment scheme that is homomorphic; the determining if the total value of the plurality of notes equals the sum of the transaction amount and the change is based on comparing a sum of the commitment of each note value and a sum of the commitment of the transaction amount and the commitment of the change; each of the plurality of note IDs includes a transaction address and an index number indicating an order of the corresponding note in transaction output, and wherein the transaction address is generated by hashing transaction information of the transaction; determining that each of the plurality of note IDs is associated with the first account; the first random number and the transaction amount are encrypted by a public key of the second account based on Paillier encryption or Okamoto-Uchiyama encryption; the determining if the transaction amount in the commitment is the same as the transaction amount that is encrypted, and if a random number used to generate the commitment of the transaction amount is the same as the first random number are based on zero-knowledge proof without interactions between the first account and the second account outside of the blockchain network.

The present disclosure also provides one or more non-transitory computer-readable storage media coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure may include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example environment that can be used to execute implementations of the present disclosure.
FIG. 2 depicts an example conceptual architecture in accordance with implementations of the present disclosure.
FIG. 3 depicts an example process of privacy-protected validation of a blockchain transaction based on an account note model in accordance with implementations of the present disclosure.
FIG. 4 depicts an example blockchain transaction based on the account note model in accordance with implementations of the present disclosure.
FIG. 5 depicts an example process that can be executed in accordance with implementations of the present disclosure.

Like reference symbols in the various drawings indicate like elements.

### DETAILED DESCRIPTION

Implementations of the present disclosure include computer-implemented methods for non-interactive privacy-protected verifications of blockchain transactions with zero-knowledge proof based on account note model. More particularly, implementations of the present disclosure are directed to validating transactions between blockchain accounts under an account note model. In some implementations, in the account note model, account balances are stored as an aggregation of notes. In accordance with implementations of the present disclosure, the transaction validation can be performed based on commitment schemes and public-key encryption scheme or integrated encryption scheme without revealing transaction amount, note value, or random numbers for generating commitments. In some implementations, actions include receiving, from a first account, a digitally signed copy of a plurality of note identifiers (IDs) identifying a corresponding plurality of notes, a commitment of a transaction amount of a transaction between the first account and a second account paid by at least a portion of the plurality of notes, a commitment of a change from deducting the transaction amount from a total value of the plurality of notes, a first random number used to generate the commitment of the transaction amount encrypted by a public key of the second account, the transaction amount encrypted by the public key of the second account, a second random number used to generate the commitment of the change encrypted by the public key of the first account, the change encrypted by the public key of the first account, one or more range proofs, and a zero-knowledge proof generated based on one or more selected random numbers; verifying a digital signature corresponding to the digitally signed copy using the public key of the first account; determining that the one or more range proofs prove that the transaction amount and the change are greater than, or equal to, zero; determining that the total value of the plurality of notes equals the sum of the transaction amount and the change; determining whether the transaction amount in the commitment is the same as the transaction amount that is encrypted, and whether a random number used to generate the commitment of the transaction amount is the same as the first random number; and updating the first account and the second account based on the plurality of notes, the transaction amount, and the change if the transaction amount in the commitment is the same as the transaction amount that is encrypted, and the random number used to generate the commitment of the transaction amount is the same as the first random number.

To provide further context for implementations of the present disclosure, and as introduced above, blockchain networks, which can also be referred to as consensus networks (e.g., made up of peer-to-peer nodes), distributed ledger system, or simply blockchain, enable participating entities to securely and immutably conduct transactions and store data. A blockchain can be provided as a public blockchain, a private blockchain, or a consortium blockchain. Implementations of the present disclosure are described in further detail herein with reference to a public blockchain, which is public among the participating entities. It is contemplated, however, that implementations of the present disclosure can be realized in any appropriate type of blockchain.

In a public blockchain, the consensus process is controlled by nodes of the consensus network. For example, hundreds, thousands, even millions of entities can participate in a public blockchain, each of which operates at least one node in the public blockchain. Accordingly, the public blockchain can be considered a public network with respect to the participating entities. In some examples, a majority of entities (nodes) must sign every block in order for the block to be valid and added to the blockchain. An example public blockchain includes the blockchain used in the Bitcoin network, which is a peer-to-peer payment network (crypto-currency network). Although the term blockchain is commonly referenced in hand with the Bitcoin network, as used herein, blockchain generally refers to distributed ledgers without particular reference to the Bitcoin network.

In general, a public blockchain supports public transactions. A public transaction is shared with all of the nodes within the blockchain, and the blockchain is replicated across all nodes. That is, all nodes are in perfect state of consensus with respect to the blockchain. To achieve consensus (e.g., agreement to the addition of a block to a blockchain), a consensus protocol is implemented within the blockchain network. An example consensus protocol includes, without limitation, proof-of-work (POW) implemented in the Bitcoin network.

Implementations of the present disclosure are described in further detail herein, in view of the above context. More particularly, and as introduced above, implementations of the present disclosure are directed to validating transactions between blockchain accounts under the account note model, where account balances are stored as an aggregation of notes. In some implementations, and as described in further detail herein, the transaction validation can be performed based on commitment schemes and HE without revealing transaction amount, note value, or random numbers for generating commitments.

According to the implementations of the present disclosure, blockchain nodes can use the account note model as a record-keeping method. Compared to the account balance model, blockchain nodes that adopt the account note model keep records of a plurality of notes instead of account balances. Each of the plurality of notes is associated with a note type and a note value. The note type can be a type of currency or asset associated with the note. The type of currency can be any type of real currency or cryptocurrency. The note value can indicate the face value of the note with the corresponding note type.

To protect data privacy, transactions can be recorded to a blockchain (ledger) based on commitment without revealing the transaction amount or monetary amount information associated with blockchain user accounts. A commitment scheme can be used to generate a commitment of a transaction amount using a random number. An example commitment scheme includes, without limitation, the Pedersen Commitment (PC) scheme. Because the transaction amount is hidden in the commitment, one or more range proofs can be used to prove that the transaction amount does not exceed the value of the blockchain user account.

Under the account balance model, the range proofs are associated with the account balance. If more than one transaction is made, but not all the transactions are validated and recorded on the blockchain, the range proofs may be associated with incorrect account balances, hence may be invalid. In comparison, under the account note model, the account value is calculated by the sum of a plurality of notes. When a transaction amount is to be transferred between blockchain user accounts, a portion of the plurality of notes with combined value greater than, or equal to the transaction amount can be used to make the transfer. Additional transfers can be made under the condition that the remaining notes have a combined value greater than the amount to be transferred. As such, even if the transactions are not validated and recorded on the blockchain, the range proofs showing that the combined value of the remaining notes is greater than, or equal to, the transaction amount can still be valid.

To validate a transaction between a user A (node) and a user B (node), for example, the transaction amount and the random number can be encrypted by the user A using a public-key encryption scheme (e.g., EIGamal) or integrated encryption scheme (e.g., ECIES) based on a public key of the user B. The transaction amount and the random number can also be used to generate a zero-knowledge proof (ZKP) for validating the transaction. The commitment of the transaction, the encrypted transaction amount, the encrypted random number, and the ZKP can be used by a blockchain node to verify whether the transaction is valid. During the validation process, the account balance, the transaction amount, or the random number do not need to be revealed or sent to the user B.

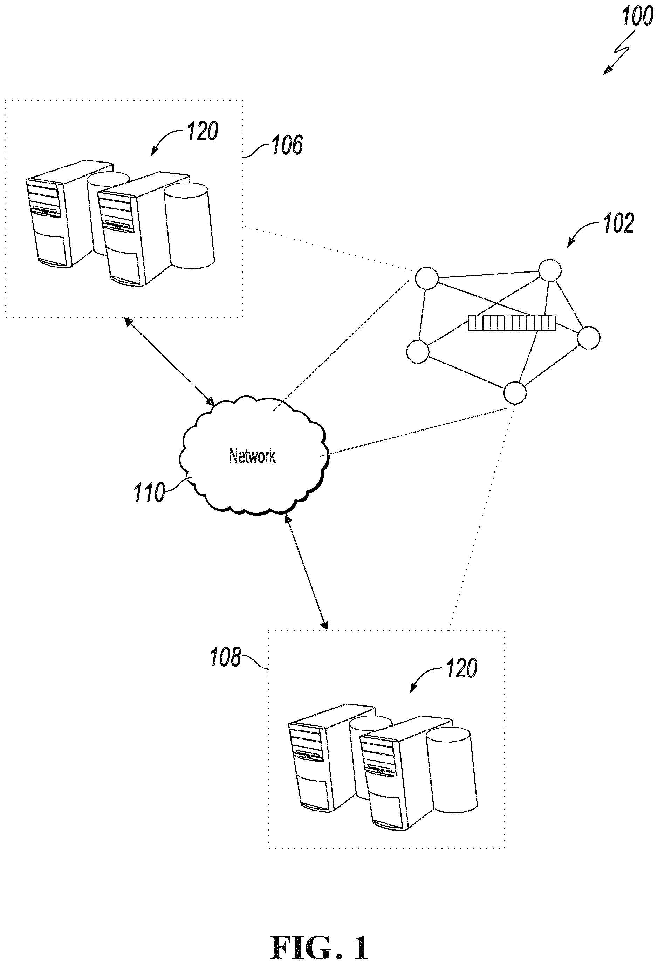

FIG. 1 depicts an example environment 100 that can be used to execute implementations of the present disclosure. In some examples, the example environment 100 enables entities to participate in a public blockchain 102. The example environment 100 includes computing systems 106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link.

In the depicted example, the computing systems 106, 108 can each, include any appropriate computing system that enables participation as a node in the public blockchain 102. Example computing devices include, without limitation, a server, a desktop computer, a laptop computer, a tablet computing device, and a smartphone. In some examples, the computing systems 106, 108 hosts one or more computer-implemented services for interacting with the public blockchain 102. For example, the computing system 106 can host computer-implemented services of a first entity (e.g., user A), such as a transaction management system that the first entity uses to manage its transactions with one or more other entities (e.g., other users). The computing system 108 can host computer-implemented services of a second entity (e.g., user B), such as a transaction management system that the second entity uses to manage its transactions with one or more other entities (e.g., other users). In the example of FIG. 1, the public blockchain 102 is represented as a peer-to-peer network of nodes, and the computing systems 106, 108 provide nodes of the first entity, and second entity respectively, which participate in the public blockchain 102.

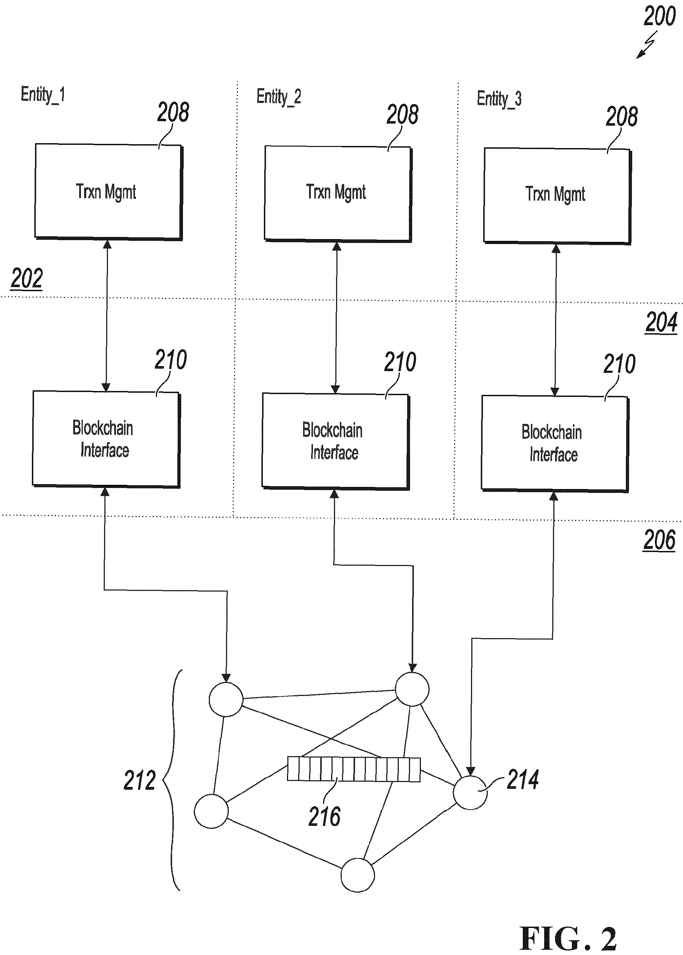

FIG. 2 depicts an example conceptual architecture 200 in accordance with implementations of the present disclosure. The example conceptual architecture 200 includes an entity layer 202, a hosted services layer 204, and a public blockchain layer 206. In the depicted example, the entity layer 202 includes three entities, Entity_1 (E1), Entity _2 (E2), and Entity _3 (E3), each entity having a respective transaction management system 208.

In the depicted example, the hosted services layer 204 includes blockchain interfaces 210 for each transaction management system 208. In some examples, a respective transaction management system 208 communicates with a respective blockchain interface 210 over a network (e.g., the network 110 of FIG. 1) using a communication protocol (e.g., hypertext transfer protocol secure (HTTPS)). In some examples, each blockchain interface 210 provides a communication connection between a respective transaction management system 208, and the blockchain layer 206. More particularly, each blockchain interface 210 enables the respective entity to conduct transactions recorded in a blockchain network 212 of the blockchain layer 206. In some examples, communication between a blockchain interface 210, and the blockchain layer 206 is conducted using remote procedure calls (RPCs). In some examples, the blockchain interfaces 210 "host" blockchain nodes for the respective transaction management systems 208. For example, the blockchain interfaces 210 provide the application programming interface (API) for access to the blockchain network 212.

As described herein, the blockchain network 212 is provided as a peer-to-peer network, including a plurality of nodes 214 that immutably record information in a blockchain 216. Although a single blockchain 216 is schematically depicted, multiple copies of the blockchain 216 are provided and are maintained across the blockchain network 212. For example, each node 214 stores a copy of the blockchain 216. In some implementations, the blockchain 216 stores information associated with transactions that are performed between two or more entities participating in the public blockchain.

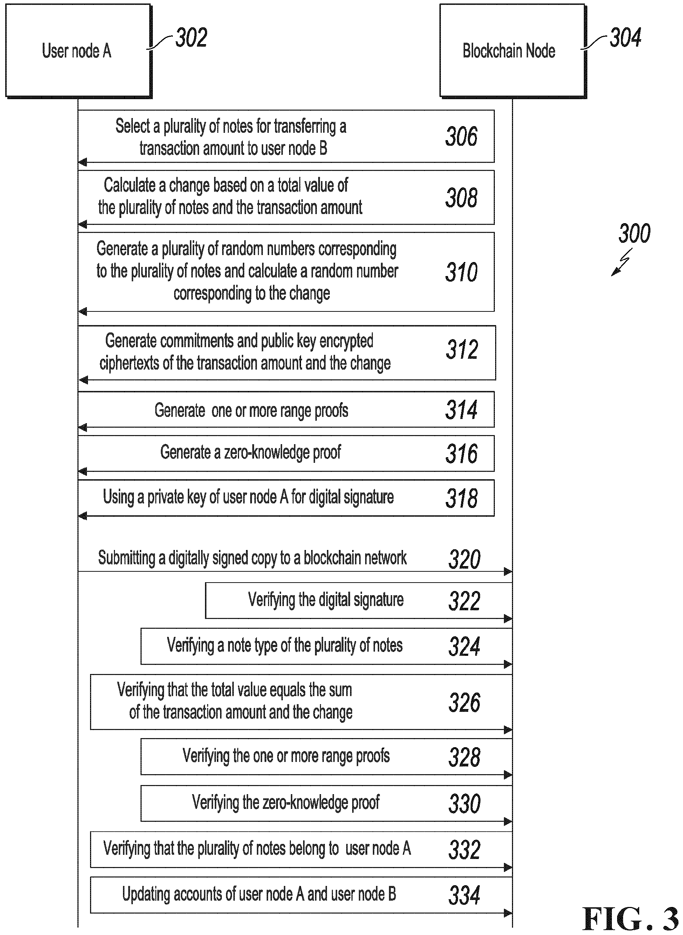

FIG. 3 depicts an example method 300 of privacy-protected validation of a blockchain transaction based on an account note model in accordance with implementations of the present disclosure. At a high-level, the example method 300 is performed by a user node A 302, a user node B (not shown in FIG. 3), and a blockchain node 304, also referred to as a consensus node. Both the account of the user node A 302, and the account of the user node are based on account note model. That is, the currencies of the user node A 302 and the user node B are kept as a plurality of notes. A transaction, such as a transfer of value, can be made from the user node A 302 to the user node B. The user node A 302 can select a set of notes from its account to cover the transaction amount. The difference between total value of the set of notes and the transaction amount can be calculated as change of the user node A 302.

To protect account privacy, the user node A 302 can generate a commitment of a transaction amount t using a commitment scheme, such as PC, based on a random number r. The user node A 302 can encrypt the transaction amount and the random number using a public-key encryption scheme or integrated encryption scheme based on a public key of the user node B. The user node A 302 can also encrypt the change and a random number corresponding to the change using a public-key encryption scheme or integrated encryption scheme based on the public key of the user node A. To verify the validity of the transaction, the blockchain node 304 can verify the encrypted transaction amount and random number with the corresponding transaction amount and random number in the commitment based on the ZKP. If the transaction amounts and random numbers match, the transaction is determined to be valid by the blockchain node 304. More details of example method 300 are discussed in the following description of FIG. 3.

At 306, the user node A 302 selects a plurality of notes for transferring a transaction amount to the user node B. The user node A 302 and user node B can be blockchain consensus node, or user nodes that use the blockchain network without participating in the consensus process. As discussed earlier, the user node A 302 can use an account note model to keep records. Instead of keeping account balance for record under the account balance model, the account value of the user node A 302 is measured by the total value of its notes. The user node A 302 can select a plurality of notes from the notes it has that are enough to cover the transaction amount. For example, if the transaction amount is 7.5 bitcoin, the user node A 302 can select three notes that are worth 5, 2, and 1 bitcoin respectively to cover the transaction amount.

In some implementations, each note can have a note type that identifies the type of currency or asset of the note. Each note can also have a note ID that includes a transaction ID and an index number. The transaction ID can be the hashing of transaction information. The index can indicate an order of the corresponding note in transaction output. For example, when sending the three notes with note amount of 5, 2, and 1 bitcoin, the 2 bitcoins note can be the second transaction output with an index number of 2. In some examples, k notes are selected, their note types and note IDs can be expressed as NoteTypei, NoteIdₐ₁, ..., NoteTypeₖ, NoteIdₐₖ. In some examples, the same type of notes can be selected to perform transfer of the transaction amount. In some cases, the note IDs corresponding to the change and the transaction amount cannot be obtained before the transaction is created. In such cases, said Note IDs can be generated based on a blockchain contract that can perform consensus and contract updates.

At 308, the user node A 302 calculates a change based on the total value of the plurality of notes and the transaction amount. Because the notes are selected to have a total value greater than the transaction amount, the change can be calculated as the total value of the selected notes deducted by the transaction amount. Using t to represent the transaction amount and to to represent the change, the calculation of the change can be expressed as to = ai + ... + aₖ - t, where ai, ..., aₖ are the note values of k notes selected by the user node A 302 to cover the transaction amount t.

At 310, the user node A 302 generates a plurality of random numbers corresponding to the plurality of notes and calculates a random number corresponding to the change. The plurality of random numbers can be generated to produce commitments of the note values. For example, ai, ..., aₖ are the note values, and the random numbers that correspond to the note values can be expressed as rₐ₁, ... , rak. The commitments of the notes can be expressed as PC(rai, ai), ..., PC(rak, aₖ).

In some implementations, a random number ro can be calculated to correspond to the change to. The calculation can be expressed as ro = rₐ₁ + ... + rak - r, where r is the random number generated to produce commitment for the transaction amount t. By calculating ro, the user node A 302 does not need to generate an additional ZKP to show that the total value of notes transferred equals the total value of notes received.

At 312, the user node A 302 generates commitments and public key encrypted ciphertexts of the transaction amount and the change. To protect data privacy, monetary values including note values, the transaction amount, and the change can be hidden by commitments based on commitment schemes. The blockchain can keep the commitments as a record. In some implementations, homomorphic commitment schemes, such as PC, can be used to generate the commitments. Using the PC as a nonlimiting example, the PC of a transaction t can be generated by using a random number r, which can be expressed as T = *PC*(*r, t*) = *g^{r}h^{t}*, where g and *h* can be generators of an elliptical curve, and *PC*(*r, t*) is a scalar multiplication of curve points. It is to be understood that other commitment schemes based on HE, such as Fujisaki-Okamoto commitment scheme can also be used to generate the commitment value.

The transaction amount and the random number can also be encrypted using the public key of the user node B. The encryption can be based on a public-key encryption scheme, such as Paillier or ElGamal algorithm, or an integrated encryption scheme such as ECIES. As such, the user node B can use its corresponding private key to reveal the transaction amount and the random number. The public key encrypted random number and transaction amount can be expressed as P_{B} = E(Pk_{B}, r), Q_{B} = E(Pk_{B}, t), respectively, where Pk_{B} represents the public key of the user node B.

Similarly, the commitment of the change can be expressed as To = PC(ro, to). The random number ro and the change amount to can also be encrypted by user node A's 302 public key expressed as P_{A} = E(Pk_{A}, ro), Q_{A} = E(Pk_{A}, to), respectively, where Pk_{A} represents the public key of the user node A 302.

At 314, the user node A 302 generates one or more range proofs. In some implementations, a first range proof, RP₁, can be generated to show that the transaction amount t ≥ 0. A second range proof, RP₂, can be generated to show that the change to ≥ 0, or in other words, the total value of the plurality of notes is greater than or equal to the transaction amount.

At 316, the user node A 302 generates a ZKP. In some implementations, the ZKP can be used to prove that the random number r and the transaction amount t included in P_{B} and Q_{B} equal the corresponding random number and transaction amount included in the commitment T. In some implementations, the ZKP can be generated using zero-knowledge succinct non-interactive argument of knowledge (zk-SNARK).

At 318, the user node A 302 uses a private key to generate a digital signature of the transaction data. In some implementations, the transaction data can include NoteTypei, NoteIdₐ₁, ..., NoteTypeₖ, Noteldak; To, T, P_{B}, Q_{B}, P_{A}, Q_{A}, RP₁, RP₂, and the ZKP.

At 320, the user node A 302 submits the digitally signed copy of the transaction data to a blockchain network.

At 322, the blockchain node 304 verifies the digital signature. The verification of the digital signature can ensure that the transaction data are sent by the user node A 302.

At 324, the blockchain node 304 verifies the note type of the plurality of notes. In other words, the blockchain node 304 verifies that NoteTypei to NoteTypeₖ are the same.

At 326, the blockchain node 304 verifies that the total value of the selected plurality of notes equals the sum of the transaction amount and the change. In other words, the blockchain verifies that ai + ... + aₖ = t + to. As discussed earlier, under the account note model, the notes can be kept on the blockchain as PCs to protect data privacy. Based on the homomorphism of PC, PC(rai, ai) + . . . + PC(rak, aₖ) = PC(rai + .. . + rak, ai + ... + ak), and PC(r, t) + PC(ro, to) = PC(r + ro, t + to). Therefore, by showing that PC(rai, ai) + ... + PC(rak, aₖ) = PC(r, t) + PC(ro, to), it can be proven that ai + ... + aₖ = t + to.

At 328, the blockchain node 304 verifies the one or more range proofs.

At 330, the blockchain node 304 verifies the ZKP, if the ZKP is successfully verified, the transaction amount and random number encrypted using the public key of the user node B are proved to be the same as the corresponding transaction amount and random number hidden by the PC. As discussed above, the ZKP can be generated using zk-SNARK

In some implementations, the ZKP can also be generated based on Sigma Protocols. Using Paillier public-key encryption as an example, P_{B} and Q_{B} can be expressed as P_{B} = E(Pk_{B}, r) = u^{r}yⁿ, Q_{B} = E(Pk, t) = u^{t}zⁿ, respectively, where u and n are public keys, y and z are random numbers.

To generate the ZKP based on Sigma Protocols, the user node A 302 can generate four additional random numbers, r^{∗}, t^{∗}, y^{∗}, and z^{∗} to calculate three ciphertexts C, D, and E. C, D, and E can be expressed as C = g^{r∗}h^{t∗}, D = u^{r∗}y^{∗n}, and E = u^{t∗} z^{∗n}. A hashed value x can be calculated by hashing T, P_{B}, Q_{B}, g, h, u, n, C, D, and E, which can be expressed as x = Hash(T, P_{B}, Q_{B}, g, h, u, n, C, D, E). Four additional ciphertexts a, b, c, and d can be calculated as a = r^{∗} + xr, b = t^{∗} + xt, c = y^{∗}y^{x}, d = z^{∗}z^{x}. Finally, the ZKP can be formed as ZKP = (C, D, E, a, b, c, d).

To verify the ZKP, the blockchain node 304 can first calculate x = Hash(T, P_{B}, Q_{B}, g, h, u, n, C, D, E). The blockchain node 304 can verify whether g^{a}h^{b} = CT^{x}, u^{a}cⁿ = DP^{x}, and u^{b}dⁿ = EQ^{x}. If so, the ZKP is verified and it is proven that the transaction amount and random number encrypted using the public key of the user node B are the same as the corresponding transaction amount, and random number hidden by the PC.

In another example, OU public key encryption can be used to encrypt the transaction amount and the random number. P_{B} and Q_{B} can be expressed as P_{B} = E(Pk_{B}, r) = u^{r}v^{y}, Q_{B} = E(Pk, t) = u^{r}v^{z}, respectively, where u, v, and n are public keys, r, y, and z are random numbers.

To generate the ZKP based on Sigma Protocols, the user node A 302 can generate four additional random numbers, r^{∗}, t^{∗}, y^{∗}, and z^{∗} to calculate three ciphertexts C, D, and E. The ciphertexts C, D, and E can be calculated as C = g^{r∗}h^{t∗}, D = u^{r∗}v^{∗y}, and E = u^{t∗}v^{∗z}. A hashed value x can be calculated by hashing T, P_{B}, Q_{B}, g, h, u, v, n, C, D, and E, which can be expressed as x = Hash(T, P_{B}, Q_{B}, g, h, u, v, n, C, D, E). Four additional ciphertexts a, b, c, and d can be calculated as a = r^{∗} + xr, b = t^{∗} + xt, c = y^{∗} + xy, d = z^{∗} + xz. Finally, the ZKP can be formed as ZKP = (C, D, E, a, b, c, d).

To verify the ZKP, the blockchain node 304 can calculate x = Hash(T, P_{B}, Q_{B}, g, h, u, v, n, C, D, E). The blockchain node 304 can verify whether g^{a}h^{b} = CT^{x}, u^{a}v^{c} = DP^{x}, and u^{b}v^{d} = EQ^{x}. If so, the ZKP is verified and it is proven that the transaction amount and random number encrypted using the public key of the user node B are the same as the corresponding transaction amount and random number hidden by the PC.

At 332, the blockchain node 304 verifies that the plurality of notes belong to the user node A 302. The verification can be based on the note IDs, Noteldai, where i = 1, . . ., k.

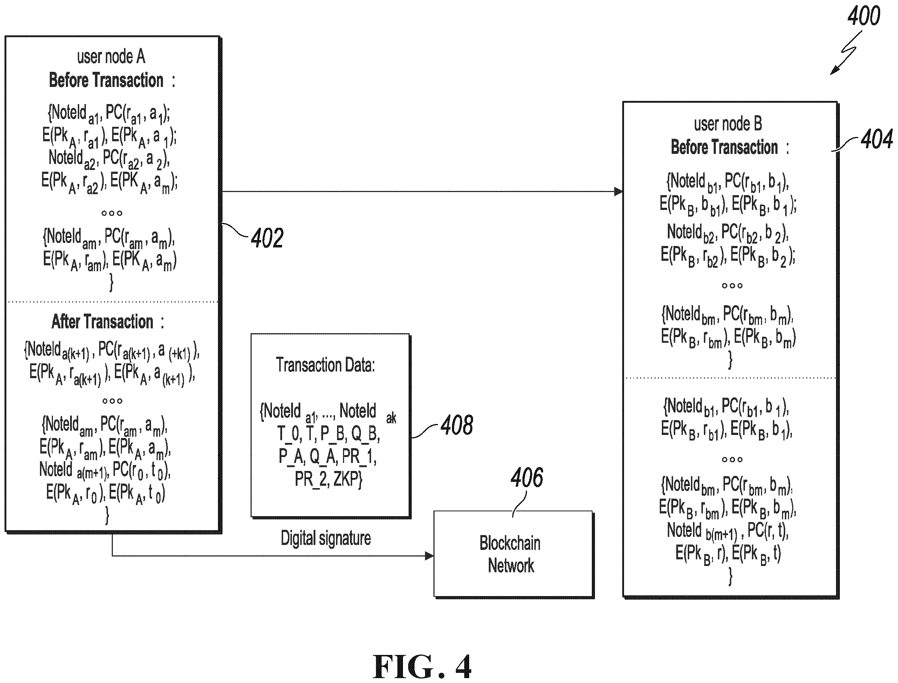

At 334, the blockchain node 304 updates the accounts of user node A 302 and the user node B. Because the accounts of the user node A 302 and the user node B keep notes as records under the account note model, after the transaction, the plurality of notes transferred out of the user node A 302 can be removed from the account of the user node A 302. The change can be added back to the account of the user node A. The transaction amount, and the corresponding note type and note ID can be added as a new note to the account of the user node B. Updating of the accounts is described in further detail herein with reference to FIG. 4.

FIG. 4 depicts an example blockchain transaction 400 based on account note model in accordance with implementations of the present disclosure. As shown in the example blockchain transaction 400, a user node A 402 transfers a transaction amount t to a user node B 404. Before the transaction, the user node A 402 has m notes including NoteIdₐ₁, PC(rₐ₁, ai), E(PkA, rₐ₁), E(PkA, ai); NoteIdₐ₂, PC(ra2, a2), E(PkA, rₐ₂), E(PKA, a2); . ; Noteldam, PC(rₐₘ, am), E(PkA, ram), E(PKA, am).

Using the commitment schemes, encryption schemes, and transaction process described herein with reference to FIG. 3 as an example, the user node A 402 generates the transaction data 408, which can include note IDs of the k selected notes and their type expressed as NoteTypei, NoteIdₐ₁, ..., NoteTypeₖ, NoteIdₐₖ. The transaction data 408 can further include To, T, P_{B}, Q_{B}, P_{A}, Q_{A}, RP₁, RP₂, and the ZKP. After the transaction data 408 are generated, the user node A 402 can add its digital signature and submit the digitally signed transaction data to the blockchain network 406 for consensus.

After the transaction, the k selected notes can be removed from the account of the user note A 402. The change can be added back to the user node A 402. Therefore, the user node A 402 can have the following notes expressed as NoteIdₐ₍ₖ₊₁₎, PC(rₐ₍ₖ₊₁₎, a₍ₖ₊₁₎), E(PkA, ra(k+i)), E(PkA, a₍ₖ₊₁₎), ..., Noteldam, PC(rₐₘ, aₘ), E(PkA, ram), E(PkA, am), NoteIdₐ₍ₘ₊₁₎, PC(ro, to), E(PkA, ro), E(PkA, to), where NoteIdₐ₍ₘ₊₁₎ represents the note ID of the change to.

Before the transaction, the user node B 404 has m notes, which can be expressed as NoteId_{b1}, PC(rbi, bi), E(Pk_{B}, rbi), E(Pk_{B}, bi); NoteId_{b2}, PC(r_{b2}, b₂), E(Pk_{B}, r_{b2}), E(Pk_{B}, b₂); ... ; Noteldbm, PC(r_{bm}, bₘ), E(PkB, r_{bm}), E(Pk_{B}, bₘ). After transaction, the transaction amount can be added to the user node B 404. The user node B 404 can have the following notes expressed as NoteId_{b1}, PC(rbi, bi), E(Pk_{B}, rbi), E(Pk_{B}, bi), ..., Noteldbm, PC(r_{bm}, bₘ), E(Pk_{B}, r_{bm}), E(Pk_{B}, bm), NoteId_{b(m+1)}, PC(r, t), E(Pk_{B}, r), E(Pk_{B}, t), where NoteId_{b(m+1)} represents the note ID of the transaction amount t.

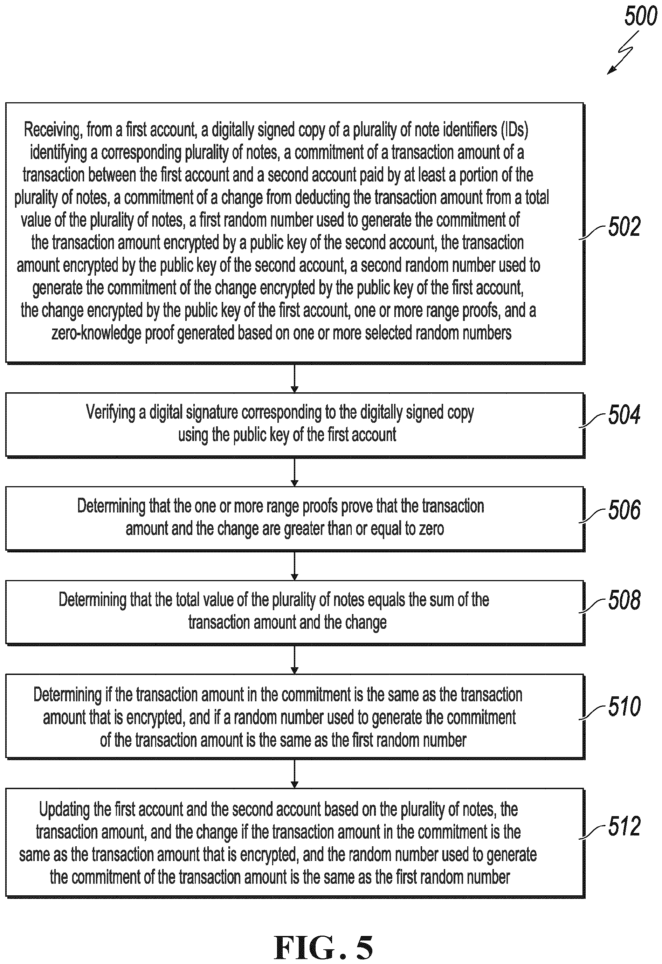

FIG. 5 depicts an example process 500 that can be executed in accordance with implementations of the present disclosure. For clarity of presentation, the description that follows generally describes the example process 500 in the context of the other figures in this description. However, it will be understood that the example process 500 can be performed, for example, by any system, environment, software, and hardware, or a combination of systems, environments, software, and hardware, as appropriate. In some implementations, various steps of the example process 500 can be run in parallel, in combination, in loops, or in any order.

At 502, a consensus node receives, from a first account, a digitally signed copy of a plurality of note IDs identifying a corresponding plurality of notes. In some examples, the consensus nodes can further receive a commitment of a transaction amount of a transaction between the first account and a second account paid by at least a portion of the plurality of notes. In some examples, the consensus nodes can further receive a commitment of a change from deducting the transaction amount from a total value of the plurality of notes. In some examples, the consensus nodes can further receive a first random number used to generate the commitment of the transaction amount encrypted by a public key of the second account, and the transaction amount encrypted by the public key of the second account. In some examples, the consensus node can further receive a second random number used to generate the commitment of the change encrypted by the public key of the first account, the change encrypted by the public key of the first account, one or more range proofs, and a zero-knowledge proof generated based on one or more selected random numbers.

In some implementations, each of the plurality of notes include one or more of a note type, a commitment of a note value, the note value encrypted by public-key encryption scheme or integrated encryption scheme, and a random number used to generate the commitment encrypted by public-key encryption scheme or integrated encryption scheme. In some implementations, the commitment of the transaction amount, the commitment of the change, and the commitment of the note value are generated using a commitment scheme that is homomorphic. In some implementations, each of the plurality of note IDs includes a transaction address and an index number indicating an order of the corresponding note in transaction output, and wherein the transaction address is generated by hashing transaction information of the transaction. In some implementations, the first random number and the transaction amount are encrypted by a public key of the second account based on an encryption scheme such as EIGamal, ECIES.

At 504, the consensus node verifies a digital signature corresponding to the digitally signed copy using the public key of the first account.

At 506, the consensus node determines that the one or more range proofs prove that the transaction amount and the change are greater than, or equal to, zero.

At 508, the consensus node determines that the total value of the plurality of notes equals the sum of the transaction amount and the change. In some implementations, determining if the total value of the plurality of notes equals the sum of the transaction amount and the change is based on comparing a sum of the commitment of each note value and a sum of the commitment of the transaction amount and the commitment of the change.

At 510, the consensus node determines if the transaction amount in the commitment is the same as the transaction amount that is encrypted, and if a random number used to generate the commitment of the transaction amount is the same as the first random number. In some implementations, the consensus node further determines that each of the plurality of notes has the same note type. In some implementations, the consensus node further determines that each of the plurality of note IDs is associated with the first account. In some implementations, determining if the transaction amount in the commitment is the same as the transaction amount that is encrypted, and if a random number used to generate the commitment of the transaction amount is the same as the first random number are based on zero-knowledge proof without interactions between the first account and the second account outside of the blockchain network.

At 512, the consensus node updates the first account and the second account based on the plurality of notes, the transaction amount, and the change if the transaction amount in the commitment is the same as the transaction amount that is encrypted, and the random number used to generate the commitment of the transaction amount is the same as the first random number.

Implementations of the subject matter described in this specification can be implemented so as to realize particular advantages or technical effects. For example, implementations of the present disclosure permits account balance and transaction amount of blockchain nodes to be private during transactions. The recipient of fund transfer does not need to confirm the transaction or use a random number to verify a commitment, the transaction validation can be non-interactive. A blockchain node can validate the transaction based on public-key encryption scheme and commitment schemes to allow zero-knowledge proof.

The described methodology permits enhancement of account/data security of various mobile computing device. The balance of the accounts and transaction amounts can be hidden by commitment schemes. As such, a consensus node can update the account balances in the ledger after transaction without revealing the actual account balance of the account. Because the random number does not need to be sent to a recipient to confirm the transaction, the risk of data leakage can be reduced and less computing and memory resources need to be used to manage the random number.

Implementations and the operations described in this specification can be implemented in digital electronic circuitry, or in computer software, firmware, or hardware, including the structures disclosed in this specification or in combinations of one or more of them. The operations can be implemented as operations performed by a data processing apparatus on data stored on one or more computer-readable storage devices or received from other sources. A data processing apparatus, computer, or computing device may encompass apparatus, devices, and machines for processing data, including by way of example a programmable processor, a computer, a system on a chip, or multiple ones, or combinations, of the foregoing. The apparatus can include special purpose logic circuitry, for example, a central processing unit (CPU), a field programmable gate array (FPGA) or an application-specific integrated circuit (ASIC). The apparatus can also include code that creates an execution environment for the computer program in question, for example, code that constitutes processor firmware, a protocol stack, a database management system, an operating system (for example an operating system or a combination of operating systems), a cross-platform runtime environment, a virtual machine, or a combination of one or more of them. The apparatus and execution environment can realize various different computing model infrastructures, such as web services, distributed computing and grid computing infrastructures.

A computer program (also known, for example, as a program, software, software application, software module, software unit, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A program can be stored in a portion of a file that holds other programs or data (for example, one or more scripts stored in a markup language document), in a single file dedicated to the program in question, or in multiple coordinated files (for example, files that store one or more modules, sub-programs, or portions of code). A computer program can be executed on one computer or on multiple computers that are located at one site or distributed across multiple sites and interconnected by a communication network.

Processors for execution of a computer program include, by way of example, both general- and special-purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data. A computer can be embedded in another device, for example, a mobile device, a personal digital assistant (PDA), a game console, a Global Positioning System (GPS) receiver, or a portable storage device. Devices suitable for storing computer program instructions and data include non-volatile memory, media and memory devices, including, by way of example, semiconductor memory devices, magnetic disks, and magneto-optical disks. The processor and the memory can be supplemented by, or incorporated in, special-purpose logic circuitry.

Mobile devices can include handsets, user equipment (UE), mobile telephones (for example, smartphones), tablets, wearable devices (for example, smart watches and smart eyeglasses), implanted devices within the human body (for example, biosensors, cochlear implants), or other types of mobile devices. The mobile devices can communicate wirelessly (for example, using radio frequency (RF) signals) to various communication networks (described below). The mobile devices can include sensors for determining characteristics of the mobile device's current environment. The sensors can include cameras, microphones, proximity sensors, GPS sensors, motion sensors, accelerometers, ambient light sensors, moisture sensors, gyroscopes, compasses, barometers, fingerprint sensors, facial recognition systems, RF sensors (for example, Wi-Fi and cellular radios), thermal sensors, or other types of sensors. For example, the cameras can include a forward- or rear-facing camera with movable or fixed lenses, a flash, an image sensor, and an image processor. The camera can be a megapixel camera capable of capturing details for facial and/or iris recognition. The camera along with a data processor and authentication information stored in memory or accessed remotely can form a facial recognition system. The facial recognition system or one-or-more sensors, for example, microphones, motion sensors, accelerometers, GPS sensors, or RF sensors, can be used for user authentication.

To provide for interaction with a user, implementations can be implemented on a computer having a display device and an input device, for example, a liquid crystal display (LCD) or organic light-emitting diode (OLED)/virtual-reality (VR)/augmented-reality (AR) display for displaying information to the user and a touchscreen, keyboard, and a pointing device by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations can be implemented using computing devices interconnected by any form or medium of wireline or wireless digital data communication (or combination thereof), for example, a communication network. Examples of interconnected devices are a client and a server generally remote from each other that typically interact through a communication network. A client, for example, a mobile device, can carry out transactions itself, with a server, or through a server, for example, performing buy, sell, pay, give, send, or loan transactions, or authorizing the same. Such transactions may be in real time such that an action and a response are temporally proximate; for example an individual perceives the action and the response occurring substantially simultaneously, the time difference for a response following the individual's action is less than 1 millisecond (ms) or less than 1 second (s), or the response is without intentional delay taking into account processing limitations of the system.

Examples of communication networks include a local area network (LAN), a radio access network (RAN), a metropolitan area network (MAN), and a wide area network (WAN). The communication network can include all or a portion of the Internet, another communication network, or a combination of communication networks. Information can be transmitted on the communication network according to various protocols and standards, including Long Term Evolution (LTE), 5G, IEEE 802, Internet Protocol (IP), or other protocols or combinations of protocols. The communication network can transmit voice, video, biometric, or authentication data, or other information between the connected computing devices.

Features described as separate implementations may be implemented, in combination, in a single implementation, while features described as a single implementation may be implemented in multiple implementations, separately, or in any suitable sub-combination. Operations described and claimed in a particular order should not be understood as requiring that the particular order, nor that all illustrated operations must be performed (some operations can be optional). As appropriate, multitasking or parallel-processing (or a combination of multitasking and parallel-processing) can be performed.

## Claims

1. A computer-implemented method (300, 500) performed by a consensus node of a blockchain network, comprising:
receiving (320, 502), from a first account, a digitally signed copy of a plurality of note identifiers, IDs, identifying a corresponding plurality of notes associated with the first account, a commitment of a transaction amount of a transaction between the first account and a second account paid by at least a portion of the plurality of notes, a commitment of a change from deducting the transaction amount from a total value of the plurality of notes, a first random number used to generate (312) the commitment of the transaction amount encrypted by a public key of the second account, the transaction amount encrypted by the public key of the second account, a second random number used to generate (312, 314, 316) the commitment of the change encrypted by the public key of the first account, the change encrypted by the public key of the first account, one or more range proofs, and a zero-knowledge proof generated (310) based on one or more selected random numbers;
verifying (322, 504) a digital signature corresponding to the digitally signed copy using the public key of the first account;
determining (328, 506) that the one or more range proofs prove that the transaction amount and the change are greater than, or equal to, zero;
determining (326, 508) that the total value of the plurality of notes equals the sum of the transaction amount and the change;
determining (510) whether the transaction amount in the commitment is the same as the transaction amount that is encrypted, and whether a random number used to generate the commitment of the transaction amount is the same as the first random number; and
updating (334, 512) the first account and the second account based on the plurality of notes, the transaction amount, and the change, if the transaction amount in the commitment is the same as the transaction amount that is encrypted and if the random number used to generate the commitment of the transaction amount is the same as the first random number.

2. The computer-implemented method (300, 500) of claim 1, wherein each of the plurality of notes include one or more of a note type, a commitment of a note value, the note value encrypted by public-key encryption or integrated encryption, and a random number used to generate the commitment encrypted by the public-key encryption or the integrated encryption.

3. The computer-implemented method (300, 500) of claim 2, further comprising determining (324) that each of the plurality of notes has the same note type.

4. The computer-implemented method (300, 500) of claim 2, wherein the commitment of the transaction amount, the commitment of the change, and the commitment of the note value are generated using a commitment scheme that is homomorphic.

5. The computer-implemented method (300, 500) of claim 4, wherein the determining (326) if the total value of the plurality of notes equals the sum of the transaction amount and the change is based on comparing a sum of the commitment of each note value and a sum of the commitment of the transaction amount and the commitment of the change.

6. The computer-implemented method (300, 500) of claim 1, wherein each of the plurality of note IDs includes a transaction address and an index number indicating an order of the corresponding note in transaction output, and wherein the transaction address is generated by hashing transaction information of the transaction.

7. The computer-implemented method (300, 500) of claim 1, further comprising determining that each of the plurality of note IDs is associated with the first account.

8. The computer-implemented method (300, 500) of claim 1, wherein the first random number and the transaction amount are encrypted by a public key of the second account based on Paillier encryption or Okamoto-Uchiyama encryption.

9. The computer-implemented method (300, 500) of claim 1, wherein the determining if the transaction amount in the commitment is the same as the transaction amount that is encrypted, and if a random number used to generate the commitment of the transaction amount is the same as the first random number are based on zero-knowledge proof without interactions between the first account and the second account outside of the blockchain network.

10. The computer-implemented method (300, 500) of any one of claims 1 to 9, wherein the second random number is used to generate (314) a plurality of range proofs.

11. The computer-implemented method (300, 500) of claim 10, wherein the plurality of range proofs include:
a first range proof (RP₁) generated (314) to prove that the transaction amount is greater than, or equal to, zero, and
a second range proof (RP₂) generated (314) to prove that the change amount is greater than, or equal to, zero.

12. A non-transitory computer-readable storage medium coupled to one or more processors and having instructions stored thereon which, when executed by the one or more processors, cause the one or more processors to perform operations in accordance with the method (300, 500) of one or more of claims 1-11.

13. A system, comprising:
a computing device; and
a computer-readable storage device coupled to the computing device and having instructions stored thereon which, when executed by the computing device, cause the computing device to perform operations in accordance with the method (300, 500) of one or more of claims 1-11.

## Patentansprüche

1. Computerimplementiertes Verfahren (300, 500), das von einem Konsensknoten eines Blockchain-Netzwerks durchgeführt wird und umfasst:
Empfangen (320, 502) von einem ersten Konto einer digital signierten Kopie einer Mehrzahl von Notenkennungen, IDs, die eine entsprechende Mehrzahl von Noten identifiziert, die mit dem ersten Konto assoziiert ist, eines Commitments eines Transaktionsbetrags einer Transaktion zwischen dem ersten Konto und einem zweiten Konto, der durch mindestens einen Teil der Mehrzahl von Noten gezahlt wird, eines Commitments einer Änderung aus dem Abziehen des Transaktionsbetrags von einem Gesamtwert der Mehrzahl von Noten, einer ersten Zufallszahl, die zum Erzeugen (312) des Commitments des Transaktionsbetrags verwendet wird und durch einen öffentlichen Schlüssel des zweiten Kontos verschlüsselt ist, des Transaktionsbetrags, der durch den öffentlichen Schlüssel des zweiten Kontos verschlüsselt ist, einer zweiten Zufallszahl, die zum Erzeugen (312, 314, 316) des Commitments der Änderung verwendet wird und durch den öffentlichen Schlüssel des ersten Kontos verschlüsselt ist, der Änderung, die durch den öffentlichen Schlüssel des ersten Kontos verschlüsselt ist, und eines oder mehrerer Bereichsnachweise und eines Nullwissensnachweises, der basierend auf einer oder mehreren ausgewählten Zufallszahlen erzeugt wird (310);
Verifizieren (322, 504) einer digitalen Signatur, die der digital signierten Kopie entspricht, unter Verwendung des öffentlichen Schlüssels des ersten Kontos;
Bestimmen (328, 506), dass der eine oder die mehreren Bereichsnachweise nachweisen, dass der Transaktionsbetrag und die Änderung größer als oder gleich null sind;
Bestimmen (326, 508), dass der Gesamtwert der Mehrzahl von Noten der Summe des Transaktionsbetrags und der Änderung entspricht;
Bestimmen (510), ob der Transaktionsbetrag im Commitment gleich wie der verschlüsselte Transaktionsbetrag ist, und ob eine Zufallszahl, die zum Erzeugen des Commitments des Transaktionsbetrags verwendet wird, gleich wie die erste Zufallszahl ist; und
Aktualisieren (334, 512) des ersten Kontos und des zweiten Kontos basierend auf der Mehrzahl von Noten, dem Transaktionsbetrag und der Änderung, falls der Transaktionsbetrag im Commitment gleich wie der verschlüsselte Transaktionsbetrag ist und falls die zum Erzeugen des Commitments des Transaktionsbetrags verwendete Zufallszahl gleich wie die erste Zufallszahl ist.

2. Computerimplementiertes Verfahren (300, 500) nach Anspruch 1, wobei jede der Mehrzahl von Noten eines oder mehrere von einem Notentyp, einem Commitment eines Notenwerts, dem Notenwert, der durch Verschlüsselung mit einem öffentlichen Schlüssel oder integrierte Verschlüsselung verschlüsselt ist, und einer Zufallszahl umfasst, die zum Erzeugen des Commitments verwendet wird und durch die Verschlüsselung mit dem öffentlichen Schlüssel oder die integrierte Verschlüsselung verschlüsselt ist.

3. Computerimplementiertes Verfahren (300, 500) nach Anspruch 2, ferner umfassend ein Bestimmen (324), dass jede der Mehrzahl von Noten denselben Notentyp aufweist.

4. Computerimplementiertes Verfahren (300, 500) nach Anspruch 2, wobei das Commitment des Transaktionsbetrags, das Commitment der Änderung und das Commitment des Notenwerts unter Verwendung eines Commitment-Schemas erzeugt werden, das homomorph ist.

5. Computerimplementiertes Verfahren (300, 500) nach Anspruch 4, wobei das Bestimmen (326), ob der Gesamtwert der Mehrzahl von Noten der Summe des Transaktionsbetrags und der Änderung entspricht, auf einem Vergleichen einer Summe des Commitments jedes Notenwerts und einer Summe des Commitments des Transaktionsbetrags und des Commitments der Änderung basiert.

6. Computerimplementiertes Verfahren (300, 500) nach Anspruch 1, wobei jede der Mehrzahl von Noten-IDs eine Transaktionsadresse und eine Indexzahl umfasst, die eine Reihenfolge der entsprechenden Note bei Transaktionsausgabe angibt, und wobei die Transaktionsadresse durch Hash-Codieren von Transaktionsinformationen der Transaktion erzeugt wird.

7. Computerimplementiertes Verfahren (300, 500) nach Anspruch 1, ferner umfassend ein Bestimmen, dass jede der Mehrzahl von Noten-IDs mit dem ersten Konto assoziiert ist.

8. Computerimplementiertes Verfahren (300, 500) nach Anspruch 1, wobei die erste Zufallszahl und der Transaktionsbetrag durch einen öffentlichen Schlüssel des zweiten Kontos basierend auf Paillier-Verschlüsselung oder Okamoto-Uchiyama-Verschlüsselung verschlüsselt werden.

9. Computerimplementiertes Verfahren (300, 500) nach Anspruch 1, wobei das Bestimmen, ob der Transaktionsbetrag im Commitment gleich wie der verschlüsselte Transaktionsbetrag ist und ob eine zum Erzeugen des Commitments des Transaktionsbetrags verwendete Zufallszahl gleich wie die erste Zufallszahl ist, auf einem Nullwissensnachweis ohne Interaktionen zwischen dem ersten Konto und dem zweiten Konto außerhalb des Blockchain-Netzwerks basiert.

10. Computerimplementiertes Verfahren (300, 500) nach einem der Ansprüche 1 bis 9, wobei die zweite Zufallszahl zum Erzeugen (314) einer Mehrzahl von Bereichsnachweisen verwendet wird.

11. Computerimplementiertes Verfahren (300, 500) nach Anspruch 10, wobei die Mehrzahl von Bereichsnachweisen umfasst:
einen ersten Bereichsnachweis (RP₁), der erzeugt wird (314), um nachzuweisen, dass der Transaktionsbetrag größer als oder gleich null ist, und
einen zweiten Bereichsnachweis (RP₂), der erzeugt wird (314), um nachzuweisen, dass der Änderungsbetrag größer als oder gleich null ist.

12. Nicht-transitorisches computerlesbares SpeicherMedium, das mit einem oder mehreren Prozessoren gekoppelt ist und Anweisungen darauf gespeichert aufweist, die bei Ausführung durch den einen oder die mehreren Prozessoren den einen oder die mehreren Prozessoren zum Durchführen von Operationen gemäß dem Verfahren (300,500) nach einem der Ansprüche 1 bis 11 veranlassen.

13. System, umfassend:
eine Computervorrichtung; und
eine computerlesbare Speichervorrichtung, die mit der Computervorrichtung gekoppelt ist und Anweisungen darauf gespeichert aufweist, die bei Ausführung durch die Computervorrichtung die Computervorrichtung zum Durchführen von Operationen gemäß dem Verfahren (300, 500) nach einem der Ansprüche 1 bis 11 veranlassen.

## Revendications

1. Procédé (300, 500) mis en œuvre par ordinateur, réalisé par un nœud de consensus d'un réseau à chaîne de blocs, comportant les étapes consistant à :
recevoir (320, 502), en provenance d'un premier compte, une copie signée numériquement d'une pluralité d'identifiants, ID, de billets, identifiant une pluralité correspondante de billets associés au premier compte, une validation d'un montant de transaction d'une transaction entre le premier compte et un second compte payé par au moins une partie de la pluralité de billets, une validation d'un reste issu de la déduction du montant de transaction d'une valeur totale de la pluralité de billets, un premier nombre aléatoire utilisé pour générer (312) la validation du montant de transaction chiffré par une clé publique du second compte, le montant de transaction chiffré par la clé publique du second compte, un second nombre aléatoire utilisé pour générer (312, 314, 316) la validation du reste chiffré par la clé publique du premier compte, le reste chiffré par la clé publique du premier compte, une ou plusieurs preuves d'étendue, et une preuve à divulgation nulle de connaissance générée (310) d'après un ou plusieurs nombres aléatoires sélectionnés ;
authentifier (322, 504) une signature numérique correspondant à la copie signée numériquement à l'aide de la clé publique du premier compte ;
déterminer (328, 506) que la ou les preuves d'étendue prouvent que le montant de transaction et le reste sont supérieurs, ou égaux, à zéro ;
déterminer (326, 508) que la valeur totale de la pluralité de billets égale la somme du montant de transaction et du reste ;
déterminer (510) si le montant de transaction dans la validation est le même que le montant de transaction qui est chiffré, et si un nombre aléatoire utilisé pour générer la validation du montant de transaction est le même que le premier nombre aléatoire ; et
mettre à jour (334, 512) le premier compte et le second compte d'après la pluralité de billets, le montant de transaction, et le reste, si le montant de transaction dans la validation est le même que le montant de transaction qui est chiffré et si le nombre aléatoire utilisé pour générer la validation du montant de transaction est le même que le premier nombre aléatoire.

2. Procédé (300, 500) mis en œuvre par ordinateur selon la revendication 1, chaque billet de la pluralité de billets comprenant un ou plusieurs éléments parmi un type de billet, une validation d'une valeur de billet, la valeur de billet étant chiffrée par chiffrement à clé publique ou chiffrement intégré, et un nombre aléatoire utilisé pour générer la validation chiffré par le chiffrement à clé publique ou le chiffrement intégré.

3. Procédé (300, 500) mis en œuvre par ordinateur selon la revendication 2, comportant en outre le fait de déterminer (324) que chaque billet de la pluralité de billets présente le même type de billet.

4. Procédé (300, 500) mis en œuvre par ordinateur selon la revendication 2, la validation du montant de transaction, la validation du reste et la validation de la valeur de billet étant générées à l'aide d'un schéma de validation qui est homomorphe.

5. Procédé (300, 500) mis en œuvre par ordinateur selon la revendication 4, le fait de déterminer (326) si la valeur totale de la pluralité de billets égale la somme du montant de transaction et le reste étant basé sur la comparaison d'une somme de la validation de chaque valeur de billet et d'une somme de la validation du montant de transaction et de la validation du reste.

6. Procédé (300, 500) mis en œuvre par ordinateur selon la revendication 1, chaque ID de la pluralité d'ID de billets comprenant une adresse de transaction et un numéro d'indice indiquant un ordre du billet correspondant dans la sortie de transaction, et l'adresse de transaction étant générée par hachage d'informations de transaction de la transaction.

7. Procédé (300, 500) mis en œuvre par ordinateur selon la revendication 1, comportant en outre le fait de déterminer que chaque ID de la pluralité d'ID de billets est associé au premier compte.

8. Procédé (300, 500) mis en œuvre par ordinateur selon la revendication 1, le premier nombre aléatoire et le montant de transaction étant chiffrés par une clé publique du second compte d'après un chiffrement de Paillier ou un chiffrement d'Okamoto-Uchiyama.

9. Procédé (300, 500) mis en œuvre par ordinateur selon la revendication 1, le fait de déterminer si le montant de transaction dans la validation est le même que le montant de transaction qui est chiffré, et si un nombre aléatoire utilisé pour générer la validation du montant de transaction est le même que le premier nombre aléatoire, étant basé sur une preuve à divulgation nulle de connaissance sans interactions entre le premier compte et le second compte à l'extérieur du réseau à chaîne de blocs.

10. Procédé (300, 500) mis en œuvre par ordinateur selon l'une quelconque des revendications 1 à 9, le second nombre aléatoire étant utilisé pour générer (314) une pluralité de preuves d'étendue.

11. Procédé (300, 500) mis en œuvre par ordinateur selon la revendication 10, la pluralité de preuves d'étendue comprenant :
une première preuve d'étendue (RP₁) générée (314) pour prouver que le montant de transaction est supérieur, ou égal, à zéro, et
une seconde preuve d'étendue (RP₂) générée (314) pour prouver que le montant du reste est supérieur, ou égal, à zéro.

12. Support de stockage non transitoire lisible par ordinateur couplé à un ou plusieurs processeurs et sur lequel sont stockées des instructions qui, lorsqu'elles sont exécutées par le ou les processeurs, amènent le ou les processeurs à effectuer des opérations conformément au procédé (300, 500) selon une ou plusieurs des revendications 1 à 11.

13. Système comportant :
un dispositif informatique ; et
un dispositif de stockage lisible par ordinateur couplé au dispositif informatique et sur lequel sont stockées des instructions qui, lorsqu'elles sont exécutées par le dispositif informatique, amènent le dispositif informatique à effectuer des opérations conformément au procédé (300, 500) selon une ou plusieurs des revendications 1 à 11.
